(19) Europäisches Patentamt
European Patent Office
Office européen des brevets

(11) Veröffentlichungsnummer : **0 487 454 A2**

# (12) EUROPÄISCHE PATENTANMELDUNG

(21) Anmeldenummer : **91810878.8**

(22) Anmeldetag : **13.11.91**

(51) Int. Cl.[5] : **A01N 35/10,** // (A01N35/10, 47:30, 47:22, 47:12, 43:88, 43:707, 43:58, 43:56, 43:50, 43:40, 37:26, 37:22, 35:10, 33:18)

(30) Priorität : **22.11.90 CH 3696/90**

(43) Veröffentlichungstag der Anmeldung : **27.05.92 Patentblatt 92/22**

(84) Benannte Vertragsstaaten : **AT BE CH DE DK ES FR GB GR IT LI LU NL SE**

(71) Anmelder : **CIBA-GEIGY AG**
**Klybeckstrasse 141**
**CH-4002 Basel (CH)**

(72) Erfinder : **Iwanzik, Wolfgang Paul, Dr.**
**Bodenackerstrasse 7 C**
**CH-4334 Sisseln (CH)**
Erfinder : **Gut, Hans, Dr.**
**Hohle Gasse 181**
**CH-4323 Wallbach (CH)**
Erfinder : **Quadranti, Marco, Dr.**
**Spitalrain 7**
**CH-5200 Brugg (CH)**

## (54) Synergistisches Mittel und Verfahren zur selektiven Unkrautbekämpfung.

(57) Herbizides Mittel, enthaltend eine Verbindung der Formel I

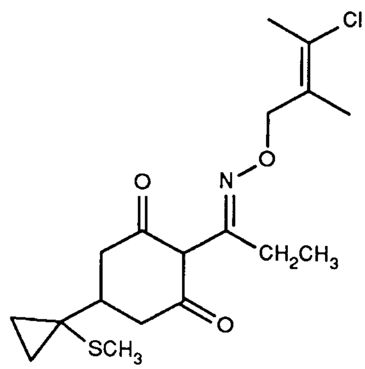

(I)

und eine synergistisch wirksame Menge entweder eines Wirkstoffs der Formel II

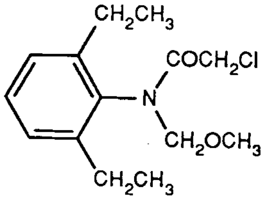

(II)

oder eines Wirkstoffs der Formel III

EP 0 487 454 A2

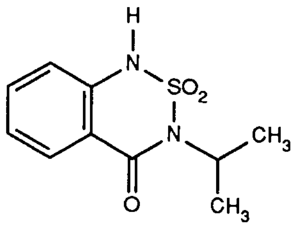

(III)

oder eines Wirkstoffs der Formel IV

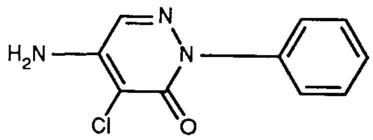

(IV)

oder eines Wirkstoffs der Formel V :

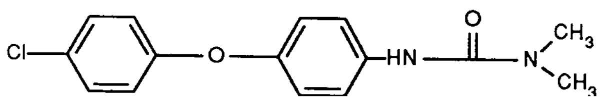

(V)

oder eines Wirkstoffs der Formel VI :

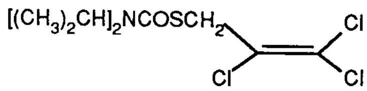

(VI)

oder eines Wirkstoffs der Formel VII :

$[CH_3(CH_2)_2]_2NCOSCH_2CH_3$ (VII)

oder eines Wirkstoffs der Formel VIII :

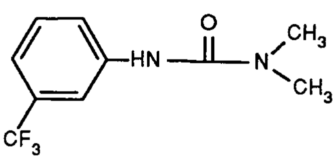

(VIII)

oder eines Wirkstoffs der Formel IX :

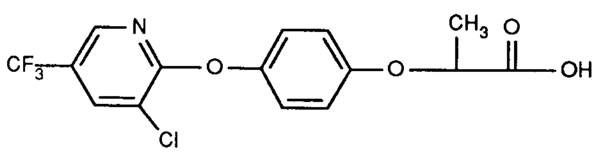

(IX)

oder eines Wirkstoffs der Formel X :

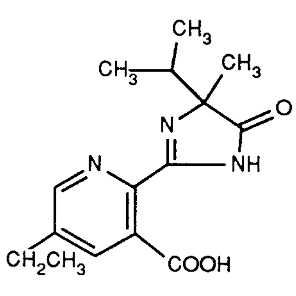

(X)

oder eines Wirkstoffs der Formel XI :

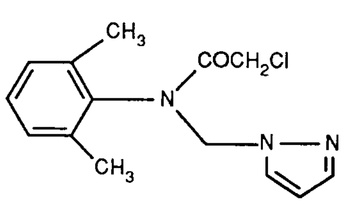

(XI)

oder eines Wirkstoffs der Formel XII:

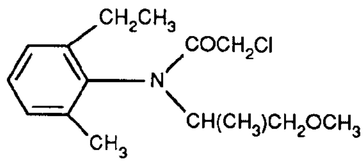

(XII)

oder eines Wirkstoffs der Formel XIII:

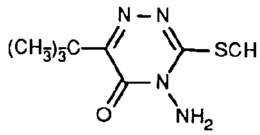

(XIII)

oder eines Wirkstoffs der Formel XIV:

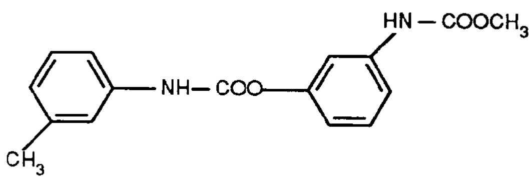

(XIV)

oder eines Wirkstoffs der Formel XV:

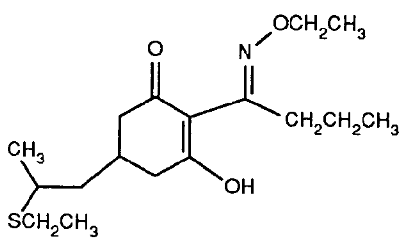

(XV)

oder eines Wirkstoffs der Formel XVI

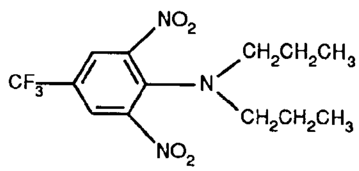

(XVI)

oder eines Wirkstoffs der Formel XVII

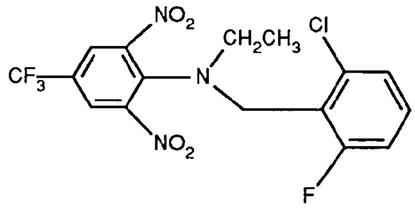

(XVII).

Die vorliegende Erfindung betrifft ein synergistisches Mittel, welches eine herbizide Wirkstoffkombination enthält, die sich hervorragend zur selektiven Unkrautbekämpfung in Nutzpflanzenkulturen, insbesondere in Kulturen von Soya, Zuckerrüben, Raps, Baumwolle und Gemüse eignet.

Die Erfindung betrifft auch ein Verfahren zur Bekämpfung von Unkräutern in Nutzpflanzenkulturen, vorzugsweise in Kulturen von Soya, Zuckerrüben, Raps, Baumwolle und Gemüse, sowie die Verwendung dieses neuen Mittels.

Als hervorragendes Selektivherbizid gegen Unkräuter in Nutzpflanzenkulturen hat sich 5-(1-Methylthiocyclopropan-1-yl)-2-[1-(trans-3-chlorallyloximino)-propionyl]-cyclohexan-1,3-dion der Formel I

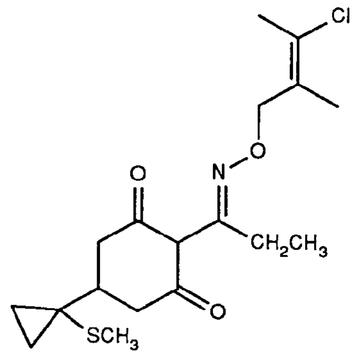

(I).

erwiesen. Dieser Wirkstoff ist mit seiner Herstellung und Verwendung in der Europäischen Patentschrift EP-A-0 243 313 beschrieben.

Ebenso sind die Verbindungen der Formeln II, III, IV, V, VI, VII, VIII, IX, X, XII, XIII, XIV, XV, XVI und XVII als selektive Herbizide bekannt. Sie sind im Handel erhältlich. Diese Verbindungen haben folgende Strukturen:

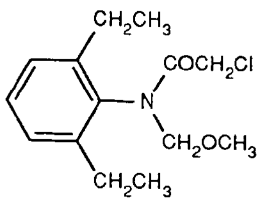

(II)

Verbindung der Formel II:

2-Chlor-N-(2,6-diethylphenyl)-N-(methoxymethyl)-acetamid (Alachlor), bekannt aus Pesticide Manual, 8th Ed. (1987), Seite 5, The British Crop Protection Council, London;

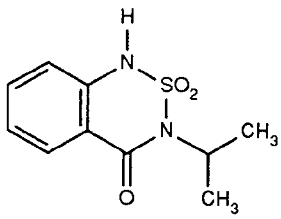

(III)

Verbindung der Formel III:

3-Isopropyl-1-H-benzo-2,1,3-thiadiazin-4-on 2,2-dioxid (Bentazon), bekannt aus Pesticide Manual, 8th Ed. (1987), Seite 63, The British Crop Protection Council, London;

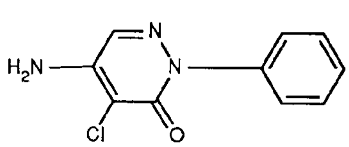

(IV)

Verbindung der Formel IV:

5-Amino-4-chlor-2-phenylpyridazin-3(2H)-on (Chloridazon), bekannt aus Pesticide Manual, 8th Ed. (1987), Seite 155, The British Crop Protection Council, London;

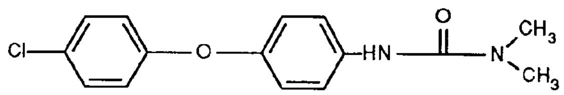

(V)

Verbindung der Formel V:

3-[4-(4-chlorphenoxy)phenyl]-N,N-dimethylharnstoff (Chloroxuron), bekannt aus Pesticide Manual, 8th Ed. (1987), Seite 174, The British Crop Protection Council, London;

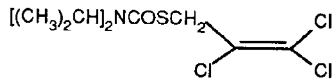

(VI)

Verbindung der Formel VI:

S-(2,3,3-Trichlorallyl)-diisopropylthiocarbamat (Tri-allate), bekannt aus Pesticide Manual, 8th Ed. (1987), Seite 816, The British Crop Protection Council, London;

$$[CH_3(CH_2)_2]_2NCOSCH_2CH_3 \quad (VII)$$

Verbindung der Formel VII:

S-Ethyl-dipropylthiocarbamat (EPTC), bekannt aus Pesticide Manual, 8th Ed. (1987), Seite 341, The British Crop Protection Council, London;

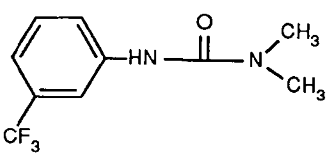

(VIII)

Verbindung der Formel VIII:

N,N,-Dimethyl-N′-[3-(trifluormethyl)phenyl]-harnstoff (Fluometuron), bekannt aus Pesticide Manual, 8th Ed. (1987), Seite 412, The British Crop Protection Council, London;

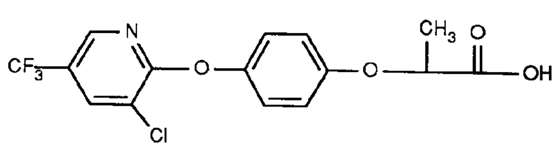

(IX)

Verbindung der Formel IX:

(RS)-2-[4-(3-Chlor-5-trifluormethyl-2-pyridyloxy)phenoxy]-propionsäure (Haloxyfop), bekannt aus Pesticide Manual, 8th Ed. (1987), Seite 453, The British Crop Protection Council, London;

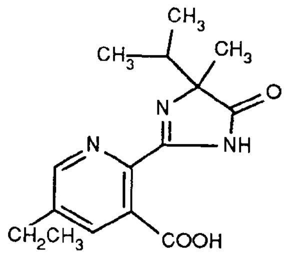

(X)

Verbindung der Formel X:

(RS)-5-Ethyl-2-(4-isopropyl-4-methyl-5-oxo-2-imidazolin-2-yl)-nikotinsäure (Imazethapyr), bekannt aus Pesticide Manual, 8th Ed. (1987), Seite 475, The British Crop Protection Council, London;

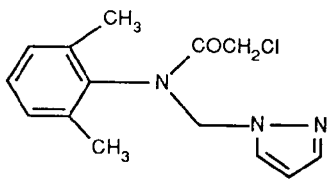

(XI)

Verbindung der Formel XI:

2-Chlor-N-(2,6-dimethylphenyl)-N-(1H-pyrazol-1-ylmethyl)-acetamid (Metazachlor), bekannt aus Pesticide Manual, 8th Ed. (1987), Seite 537, The British Crop Protection Council, London;

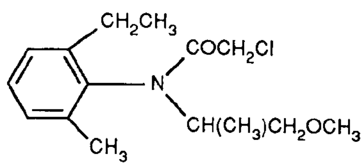

(XII)

Verbindung der Formel XII:

2-Chlor-N-(2-ethyl-6-methylphenyl)-N-(2-methoxy-1-methyethyl)-acetamid (Metolachlor), bekannt aus Pesticide Manual, 8th Ed. (1987), Seite 568, The British Crop Protection Council, London;

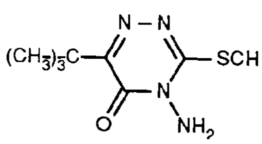

(XIII)

Verbindung der Formel XIII:

4-Amino-6-tert.-butyl-3-methylthio-1,2,4-triazin-5-on (Metribuzin), bekannt aus Pesticide Manual, 8th Ed. (1987), Seite 573, The British Crop Protection Council, London;

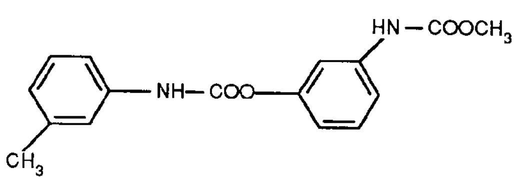

(XIV)

Verbindung der Formel XIV:

Methyl-3-(3-methylcarbaniloyloxy)-carbanilat (Phenmedipham), bekannt aus Pesticide Manual, 8th Ed. (1987), Seite 652, The British Crop Protection Council, London;

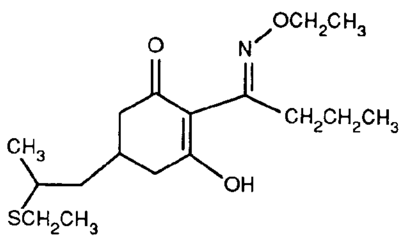

(XV)

Verbindung der Formel XV:

(±)-(ZE)-2-(1-Ethoxyiminobutyl)-5-[2-(ethylthio)propyl]-3-hydroxycyclohex-2-enon (Sethoxydim), bekannt aus Pesticide Manual, 8th Ed. (1987), Seite 744, The British Crop Protection Council, London;

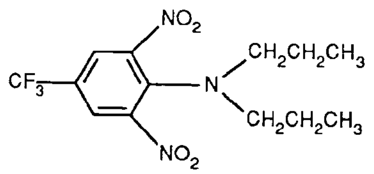

(XVI)

Verbindung der Formel XVI:

2,6-Dinitro-N,N-dipropyl-4-trifluormethylanilin (Trifluralin), bekannt aus Pesticide Manual, 8th Ed. (1987), Seite 744, The British Crop Protection Council, London;

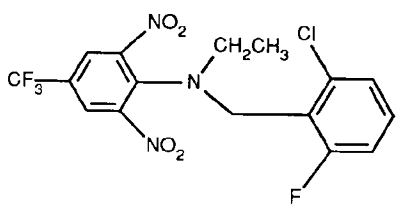

(XVII)

Verbindung der Formel XVII:

2-Chlor-N-[2,6-dinitro-4-trifluormethyl)phenyl]-N-ethyl-6-fluorbenzolmethanamin (Flumetralin), bekannt aus Pesticide Manual, 8th Ed. (1987), Seite 411, The British Crop Protection Council, London.

Es hat sich nun überraschenderweise gezeigt, daß eine mengenmäßig variable Kombination zweier Wirkstoffe, einerseits der Wirkstoff der Formel I und andererseits ein Wirkstoff der Formeln II, III, IV, V, VI, VII, VIII, IX, X, XII, XIII, XIV, XV, XVI oder XVII eine synergistische Wirkung entfaltet, die die Mehrzahl der in Nutzpflanzenkulturen vorkommenden Unkräuter sowohl im Vorauflauf- als auch im Nachauflaufverfahren zu bekämpfen vermag, ohne die Nutzpflanze zu schädigen.

Es wird daher gemäß der vorliegenden Erfindung ein neues synergistisches Mittel zur selektiven Unkrautbekämpfung vorgeschlagen, das als Wirkstoff einerseits

5-(1-Methylthiocyclopropan-1-yl)-2-[1-(trans-3-chlorallyloximino)-propionyl]-cyclohexan- 1,3-dion der Formel I

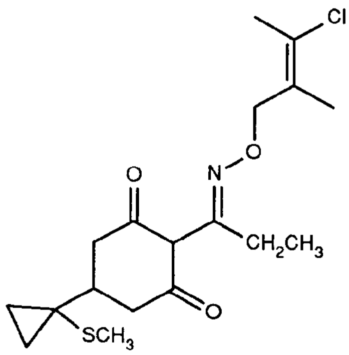

(I)

und andererseits eine synergistisch wirksame Menge entweder eines Wirkstoffs der Formel II

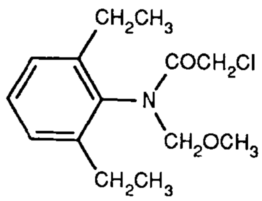

(II)

oder eines Wirkstoffs der Formel III

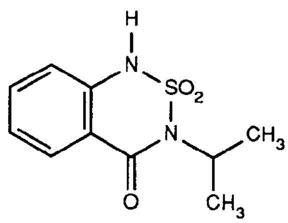

(III)

oder eines Wirkstoffs der Formel IV

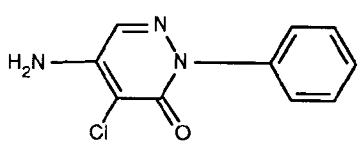

(IV)

oder eines Wirkstoffs der Formel V:

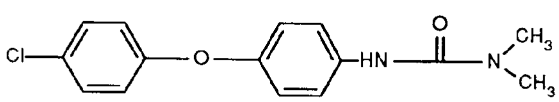

(V)

oder eines Wirkstoffs der Formel VI:

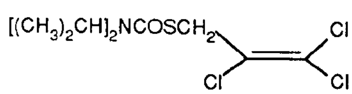

(VI)

oder eines Wirkstoffs der Formel VII:

$[CH_3(CH_2)_2NCOSCH_2CH_3$ (VII)

oder eines Wirkstoffs der Formel VIII:

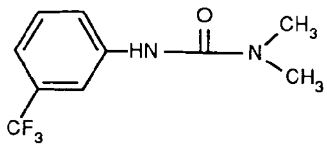

(VIII)

oder eines Wirkstoffs der Formel IX:

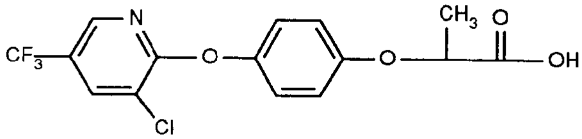

(IX)

oder eines Wirkstoffs der Formel X:

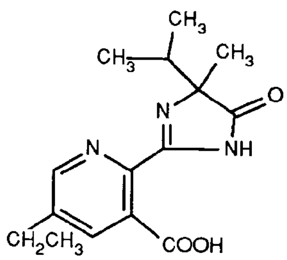

(X)

oder eines Wirkstoffs der Formel XI:

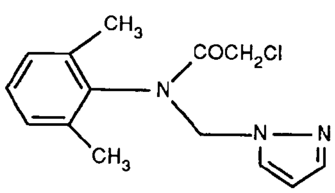

(XI)

oder eines Wirkstoffs der Formel XII:

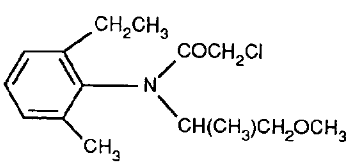

(XII)

oder eines Wirkstoffs der Formel XIII:

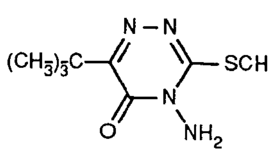

(XIII)

oder eines Wirkstoffs der Formel XIV:

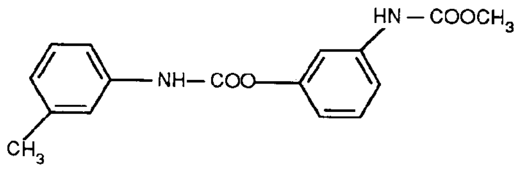

(XIV)

oder eines Wirkstoffs der Formel XV:

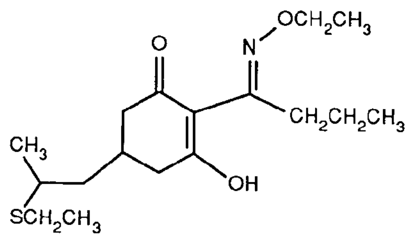

(XV)

oder eines Wirkstoffs der Formel XVI

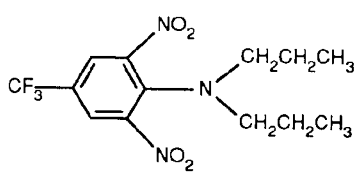

(XVI)

oder eines Wirkstoffs der Formel XVII

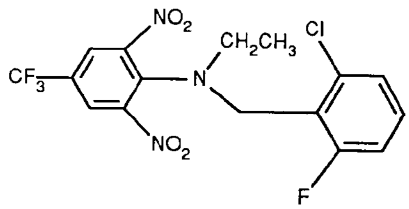

(XVII)

in Mischung miteinander enthält.

Es ist in hohem Maße überraschend, daß die Kombination des Wirkstoffs der Formel I mit einem Wirkstoff der Formeln II, III, IV, V, VI, VII, VIII, IX, X, XII, XIII, XIV, XV, XVI und XVII nicht nur eine prinzipiell zu erwartende additive Ergänzung des Wirkungsspektrums auf die zu bekämpfenden Unkräuter hervorruft, sondern daß sie einen synergistischen Effekt erzielt, der die Wirkungsgrenzen beider Präparate unter zwei Aspekten erweitert:

Einmal werden die Aufwandmengen der Einzelverbindungen I und II, III, IV, V, VI, VII, VIII, IX, X, XII, XIII, XIV, XV, XVI und XVII bei gleichbleibend guter Wirkung gesenkt. Zum anderen erzielt die kombinierte Mischung auch dort noch einen hohen Grad der Unkrautbekämpfung, wo beide Einzelsubstanzen im Bereich allzu geringer Aufwandmengen völlig wirkungslos geworden sind. Dies hat eine wesentliche Verbreiterung des Unkrautspektrums und eine zusätzliche Erhöhung der Sicherheitsmarge auf den Nutzpflanzenkulturen zur Folge, wie sie für unbeabsichtigte Wirkstoffüberdosierung notwendig und erwünscht ist.

Die erfindungsgemäße Wirkstoffkombination enthält einen Wirkstoff der Formel I und einen Wirkstoff der Formeln II, III, IV, V, VI, VII, VIII, IX, X, XII, XIII, XIV, XV, XVI oder XVII in beliebigem Mischungsverhältnis, in der Regel mit einem Überschuß der einen über die andere Komponente. Bevorzugte Mischungsverhältnisse zwischen dem Wirkstoff der Formel I und den Mischpartnern der Formeln II, III, IV, V, VI, VII, VIII, IX, X, XII, XIII, XIV, XV, XVI oder XVII liegen zwischen 1 : 1000 und 1 : 1, insbesondere zwischen 1 : 500 und 1 : 5.

Als ganz besonders wirksame synergistische Wirkstoffgemische haben sich Kombinationen der Verbindung der Formel I mit den Verbindungen der Formeln III, VI, VIII, XII, XIII und XIV erwiesen.

Die erfindungsgemäße herbizide Wirkstoffkombination eignet sich hervorragend zur selektiven Unkrautbekämpfung in Nutzpflanzenkulturen, insbesondere in Kulturen von Soya, Zuckerrüben, Raps, Baumwolle und Gemüse. Besonders herausragende Wirksamkeit gegen Unkräuter wurde in Kulturen von Raps, Baumwolle,

Soya, und Zuckerrüben festgestellt.

Mit der erfindungsgemäßen herbiziden Wirkstoffkombination kann eine große Zahl agronomisch wichtiger Unkräuter, wie beispielsweise Digitaria sanguinalis, Sorghum halepense, Alopecurus myosuroides, Setaria faberi oder Echinochloa crus galli sowohl im Vorauflauf- als auch im Nachauflaufverfahren bekämpft werden.

Die Aufwandmenge kann innerhalb weiter Bereiche variieren und hängt von der Beschaffenheit des Bodens, der Art der Anwendung (pre- oder postemergent; Saatbeizung; Anwendung in der Saatfurche; no tillage Anwendung etc.), der Kulturpflanze, dem zu bekämpfenden Unkraut, den jeweils vorherrschenden klimatischen Verhältnissen und anderen durch Anwendungsart, Anwendungszeitpunkt und Zielkultur bestimmten Faktoren ab. Im allgemeinen kann das erfindungsgemäße Wirkstoffgemisch mit einer Aufwandmenge von 10 bis 2000 [g Aktivsubstanz/ha], insbesondere 30 bis 1000 [g Aktivsubstanz/ha] angewendet werden.

Die Gemische der Verbindung der Formel I mit den Verbindungen der Formeln II, III, IV, V, VI, VII, VIII, IX, X, XII, XIII, XIV, XV, XVI oder XVII werden in unveränderter Form, wie aus der Synthese erhältlich, oder vorzugsweise mit den in der Formulierungstechnik üblichen Hilfsmitteln eingesetzt und werden daher z.B. zu emulgierbaren Konzentraten, direkt versprühbaren oder verdünnbaren Lösungen, verdünnten Emulsionen, Spritzpulvern, löslichen Pulvern, Stäubemitteln, Granulaten, auch zu Verkapselungen in z.B. polymeren Stoffen in bekannter Weise verarbeitet. Die Anwendungsverfahren wie Versprühen, Vernebeln, Verstäuben, Benetzen, Verstreuen oder Gießen werden gleich wie die Art der Mittel den angestrebten Zielen und den gegebenen Verhältnissen entsprechend gewählt.

Die Formulierungen, d.h. die die Wirkstoffe der Formeln I und II, III, IV, V, VI, VII, VIII, IX, X, XII, XIII, XIV, XV, XVI oder XVII, sowie gegebenenfalls einen oder mehrere feste oder flüssige Zusatzstoffe enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen und gegebenenfalls oberflächenaktiven Verbindungen (Tensiden).

Als Lösungsmittel können in Frage kommen: Aromatische Kohlenwasserstoffe, insbesondere die Fraktionen $C_8$ bis $C_{12}$, wie Mischungen von Alkylbenzolen, z.B. Xylolgemische oder alkylierte Naphthaline; aliphatische und cycloaliphatische Kohlenwasserstoffe wie Paraffine, Cyclohexan oder Tetrahydronaphthalin; Alkohole, wie Ethanol, Propanol oder Butanol; Glykole sowie deren Ether und Ester, wie Propylenglykol oder Dipropylenglykolether, Ketone wie Cyclohexanon, Isophoron oder Diacetonalkohol, starke polare Lösungsmittel wie N-Methyl-2-pyrrolidon, Dimethylsulfoxid oder Wasser; Pflanzenöle sowie deren Ester, wie Raps-, Ricinus- oder Sojaöl; gegebenenfalls auch Silikonöle.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüber hinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen seien die Alkali-, Erdalkali oder gegebenenfalls substituierten Ammoniumsalze von höheren Fettsäuren ($C_{10}$-$C_{22}$), wie z.B. die Na- oder K-Salze der Öl- oder Stearinsäure, oder von natürlichen Fettsäuregemischen genannt, die z.B. aus Kokosnuß- oder Talgöl gewonnen werden können. Ferner sind auch die Fettsäure-methyl-taurinsalze zu erwähnen.

Häufiger werden jedoch sog. synthetische Tenside verwendet, insbesondere Fettalkoholsulfonate, Fettalkoholsulfate, sulfonierte Benzimidazolderivate oder Alkylarylsulfonate.

Die Fettalkoholsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschließt, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Ethylenoxid-Addukten. Die sulfonierten Benzimidazolderivate enthalten vorzugsweise 2 Sulfonsäuregruppen und einen Fettsäurerest mit 8-22 C-Atomen. Alkylarylsulfonate sind z.B. die Na-, Ca- oder Triethanolaminsalze der Dodecylbenzolsulfonsäure, die Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eines p-Nonylphenol-(4-14)-Ethylenoxid-Adduktes oder Phospholipide in Frage.

Als nichtionische Tenside kommen in erster Linie Polyglykoletherderivate von aliphatischen oder cycloaliphatischen Alkoholen, gesättigten oder ungesättigten Fettsäuren und Alkylphenolen in Frage, die 3 bis 30 Glykolethergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Ethylenglykolethergruppen und 10 bis 100 Propylenglykolethergruppen, enthaltenden Polyethylenoxidaddukte an Polypropylenglykol, Ethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Ethylenglykoleinheiten.

Als Beispiele nicht ionischer Tenside seien Nonylphenolpolyethoxyethanole, Ricinusölpolyglykolether, Polypropylen-Polyethylenoxidaddukte, Tributylphenoxypolyethoxyethanol, Polyethylenglykol und Octylphenoxypolyethoxyethanol erwähnt.

Ferner kommen auch Fettsäureester von Polyoxyethylensorbitan wie das Polyoxyethylensorbitan-trioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Ethylsulfate vor, z.B. das Stearyltrimethylammoniumchlorid oder das Benzyldi-(2-chlorethyl)-ethylammoniumbromid.

Die in der Formulierungstechnik gebräuchlichen Tenside sind u.a. in folgenden Publikationen beschrieben:

- "Mc Cutcheon's Detergents and Emulsifiers Annual", Mc Publishing Corp., Glen Rock, New Jersey, 1988.
- M. and J. Ash, "Encyclopedia of Surfactants", Vol. I-III, Chemical Publishing Co., New York, 1980- 1981.
- Dr. Helmut Stache "Tensid-Taschenbuch", Carl Hanser Verlag, München/Wien 1981.

Die pestiziden Zubereitungen enthalten in der Regel 0,1 bis 99 %, insbesondere 0,1 bis 95 %, Wirkstoffgemisch der Formel I mit den Formeln II, III, IV, V, VI, VII, VIII, IX, X, XII, XIII, XIV, XV, XVI oder XVII, 1 bis 99 % eines festen oder flüssigen Zusatzstoffes und 0 bis 25 %, insbesondere 0,1 bis 25 % eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren z.B. gegebenenfalls epoxydierte Pflanzenöle (epoxydiertes Kokosnußöl, Rapsöl oder Sojaöl), Entschäumer, z.B. Silikonöl, Konservierungsmittel, Viskositätsregulatoren, Bindemittel, Haftmittel sowie Dünger oder andere Wirkstoffe zur Erzielung spezieller Effekte enthalten.

Insbesondere setzen sich bevorzugte Formulierungen folgendermaßen zusammen : (% = Gewichtsprozent)

Emulgierbare Konzentrate:

| | |
|---|---|
| Aktives Wirkstoffgemisch: | 1 bis 90 %, vorzugsweise 5 bis 20 % |
| oberflächenaktives Mittel: | 1 bis 30 %, vorzugsweise 10 bis 20 % |
| flüssiges Trägermittel: | 5 bis 94 %, vorzugsweise 70 bis 85 % |

Stäube:

| | |
|---|---|
| Aktives Wirkstoffgemisch: | 0,1 bis 10 %, vorzugsweise 0,1 bis 1 % |
| festes Trägermittel: | 99,9 bis 90 %, vorzugsweise 99,9 bis 99 % |

Suspensions-Konzentrate:

| | |
|---|---|
| Aktives Wirkstoffgemisch: | 5 bis 75 %, vorzugsweise 10 bis 50 % |
| Wasser: | 94 bis 24 %, vorzugsweise 88 bis 30 % |
| oberflächenaktives Mittel: | 1 bis 40 %, vorzugsweise 2 bis 30 % |

Benetzbare Pulver:

| | |
|---|---|
| Aktives Wirkstoffgemisch: | 0,5 bis 90 %, vorzugsweise 1 bis 80 % |
| oberflächenaktives Mittel: | 0,5 bis 20 %, vorzugsweise 1 bis 15 % |
| festes Trägermaterial: | 5 bis 95 %, vorzugsweise 15 bis 90 % |

Granulate:

| | |
|---|---|
| Aktives Wirkstoffgemisch: | 0,5 bis 30 %, vorzugsweise 3 bis 15 % |
| festes Trägermittel: | 99,5 bis 70 %, vorzugsweise 97 bis 85 % |

F1. Formulierungsbeispiele

Mischungen der Verbindungen der Formeln I und II, III, IV, V, VI, VII, VIII, IX, X, XII, XIII, XIV, XV, XVI oder XVII (% = Gewichtsprozent)

| a) Spritzpulver | a) | b) | c) | d) |
|---|---|---|---|---|
| Mischung Wirkstoff der Formel I mit einem der Wirkstoffe der Formeln II, III, II, III, IV, V, VI, VII, VIII, IX, X, XII, XIII, XIV, XV, XVI oder XVII | 10% | 20 % | 5 % | 30 % |
| Na-Ligninsulfonat | 5 % | 5 % | 5 % | 5 % |
| Na-Laurylsulfat | 3 % | - | 3 % | - |
| Na-Diisobutylnaphthalinsulfonat | - | 6 % | - | 6 % |
| Octylphenolpolyethylenglykolether (7-8 Mol EO) | - | 2 % | - | 2 % |
| Hochdisperse Kieselsäure | 5 % | 27 % | 5 % | 27 % |
| Kaolin | 67 % | - | 67 % | - |

Der Wirkstoffgemisch wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

b) Emulsions-Konzentrat

| | a) | b) | c) |
|---|---|---|---|
| Mischung Wirkstoff der Formel I mit einem der Wirkstoffe der Formeln II, III, II, III, IV, V, VI, VII, VIII, IX, X, XII, XIII, XIV, XV, XVI oder XVII | 5 % | 5 % | 12 % |
| Octylphenolpolyethylenglykolether (4-5 Mol EO) | 3 % | 3 % | 3 % |
| Ca-Dodecylbenzolsulfonat | 3 % | 3 % | 2 % |
| Ricinusölpolyglykolether (36 Mol EO) | 4 % | 4 % | 4 % |
| Cyclohexanon | 30 % | 30 % | 31 % |
| Xylolgemisch | 50 % | 35 % | 35 % |

Aus diesen Konzentraten können durch Verdünnen mit Wasser Emulsionen jeder gewünschten Konzentration hergestellt werden.

c) Stäubemittel

| | a) | b) | c) | d) |
|---|---|---|---|---|
| Mischung Wirkstoff der Formel I mit einem der Wirkstoffe der Formeln II, III, II, III, IV, V, VI, VII, VIII, IX, X, XII, XIII, XIV, XV, XVI oder XVII | 2 % | 4 % | 2 % | 4 % |
| Talkum | 3 % | 4 % | 4 % | 8 % |
| Kaolin | 95 % | 92 % | 94 % | 88 % |

Man erhält anwendungsfertige Stäubemittel, indem das Wirkstoffgemisch mit dem Träger vermischt und auf einer geeigneten Mühle vermahlen wird.

d) Extruder Granulat

| | a) | b) | c) |
|---|---|---|---|
| Mischung Wirkstoff der Formel I mit einem der Wirkstoffe der Formeln II, III, II, III, IV, V, VI, VII, VIII, IX, X, XII, XIII, XIV, XV, XVI oder XVII | 5 % | 3 % | 5 % |
| Na-Ligninsulfonat | 2 % | 2 % | 2 % |
| Carboxymethylcellulose | 1 % | 1 % | 1 % |
| Kaolin | 87 % | 87 % | 77 % |

Das Wirkstoffgemisch wird mit den Zusatzstoffen vermischt, vermahlen und mit Wasser angefeuchtet. Dieses Gemisch wird extrudiert und anschließend im Luftstrom getrocknet.

| e) Umhüllungs-Granulat | a) | b) |
|---|---|---|
| Mischung Wirkstoff der Formel I mit einem der Wirkstoffe der Formeln II, III, II, III, IV, V, VI, VII, VIII, IX, X, XII, XIII, XIV, XV, XVI oder XVII | 1,5 % | 3 % |
| Polyethylenglykol (MG 200) | 3 % | 3 % |
| Kaolin | 94 % | 89 % |

Das fein gemahlene Wirkstoffgemisch wird in einem Mischer auf das mit Polyethylenglykol angefeuchtete Kaolin gleichmäßig aufgetragen. Auf diese Weise erhält man staubfreie Umhüllungs-Granulate.

| f) Suspensions-Konzentrat | a) | b) |
|---|---|---|
| Mischung Wirkstoff der Formel I mit einem der Wirkstoffe der Formeln II, III, II, III, IV, V, VI, VII, VIII, IX, X, XII, XIII, XIV, XV, XVI oder XVII | 20 % | 20 % |
| Ethylenglykol | 10 % | 10 % |
| Nonylphenolpolyethylenglykolether (15 Mol EO) | 6 % | 6 % |
| Na-Ligninsulfonat | 10 % | 10 % |
| Carboxymethylcellulose | 1 % | 1 % |
| 37 %ige wäßrige Formaldehyd-Lösung | 0,2 % | 0,2 % |
| Silikonöl in Form einer 75%igen wäßrigen Emulsion | 0,8 % | 0,8 % |
| Wasser | 32 % | 12 % |

Das fein gemahlene Wirkstoffgemisch wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Es ist oft praktischer, den Wirkstoff der Formel I und den Mischpartner der Formeln II bis XVII einzeln zu formulieren und sie dann erst kurz vor dem Ausbringen im Applikator im gewünschten Mischungsverhältnis als "Tankmischung" im Wasser zusammenzubringen

## Biologische Beispiele

Ein synergistischer Effekt liegt immer dann vor, wenn die Wirkung der Wirkstoffkombination I und II, III, IV, V, VI, VII, VIII, IX, X, XII, XIII, XIV, XV, XVI oder XVII größer ist als die Summe der Wirkung der einzeln applizierten Wirkstoffe.

Die zu erwartende herbizide Wirkung We für eine gegebene Kombination zweier Herbizide kann (vgl. COLBY, S.R., "Calculating synergistic and antagonstic response of herbicide combinations", Weeds 15, Seiten 20-22, 1967) wie folgt berechnet werden:

$$We = X + \frac{Y \cdot (100-X)}{100}$$

Dabei bedeuten:

X = Prozent Wachstumshemmung bei Behandlung mit der Verbindung der Formel I mit p kg Aufwandmenge pro Hektar im Vergleich zur unbehandelten Kontrolle (= 0 %).

Y = Prozent Herbizidwirkung bei Behandlung mit einer Verbindung der Formeln II, III, IV, V, VI, VII, VIII, IX, X, XII, XIII, XIV, XV, XVI oder XVII mit q kg Aufwandmenge pro Hektar im Vergleich zur unbehandelten Kontrolle.

We = Erwartete herbizide Wirkung (Prozent Wachstumshemmung im Vergleich zur unbehandelten Kontrolle) nach Behandlung mit der Verbindung der Formel I und II, III, IV, V, VI, VII, VIII, IX, X, XII, XIII, XIV, XV, XVI oder XVII bei einer Aufwandmenge von p + q kg Wirkstoffmenge pro Hektar.

Ist die tatsächlich beobachtete Wirkung größer als der zu erwartende Wert We, so liegt Synergismus vor.

Der synergistische Effekt der Kombinationen des Wirkstoffs der Formel I mit den Wirstoffen der Formeln II, III, IV, V, VI, VII, VIII, IX, X, XII, XIII, XIV, XV, XVI und XVII wird in den folgenden Beispielen demonstriert.

Biologische Beispiele:

Beispiel B1: Preemergenter Versuch:

Die Testpflanzensamen werden in Plastiktöpfe, die 0,5l sterilisierte Ackererde enthalten, im Gewächshaus angesät. Einen Tag nach der Saat wird die Erdoberfläche mit einer wäßrigen Dispersion der Wirkstoffkombination besprüht. Die Aufwandmenge an Wirksubstanz wird durch geeignete Verdünnung des Konzentrats eingestellt. Man versprüht jeweils 55 ml Dispersion pro $m^2$. Die Testpflanzen werden im Gewächshaus bei täglicher Bewässerung weiterkultiviert.

Nach 3 Wochen wird die Herbizidwirkung im Vergleich in einer unbehandelten Kontrollgruppe bewertet. Registriert wird die prozentuale Wachstumshemmung im Vergleich zur unbehandelten Kontrolle. Als Maßstab gilt folgende lineare Skala:

100 % = Pflanzen abgestorben
50 % = mittlere Wirkung
0 % = wie unbehandelte Kontrolle

Die Vergleichsergebnisse sind zusammen mit den nach der Colby-Formel berechneten Erwartungswerten in den Tabellen 1 und 2 eingetragen. Angegeben sind die Formelbezeichnungen der jeweils angewendeten Wirkstoffe und deren Aufwandmengen sowie die geprüften Unkrautpflanzen.

Tabelle 1: Synergistische Wirkung gegen Sorghum halepense im Vorauflauf:

| Wirksubstanzen und Aufwandmengen in g AS/ha | Erwartungswert (nach Colby) | gemessene Wachstumshemmung |
|---|---|---|
| 30 g I | ---- | 57 |
| 250 g II | ---- | 20 |
| 30 g I + 250 g II | 65 | 95 |
| 30 g I | ---- | 57 |
| 1000 g VII | ---- | 10 |
| 30 g I + 1000 g VII | 61 | 95 |
| 30 g I | ---- | 57 |
| 250 g XII | ---- | 20 |
| 30 g I + 250 g XII | 65 | 95 |
| 30 g I | ---- | 57 |
| 125 g XVII | ---- | 0 |
| 30 g I + 125 g XVII | 57 | 98 |

Tabelle 2: Synergistische Wirkung gegen Alopecurus myosuroides im Vorauflauf:

| Wirksubstanzen und Aufwandmengen in g AS/ha | Erwartungswert (nach Colby) | gemessene Wachstumshemmung |
|---|---|---|
| 30 g I | ---- | 3 |
| 500 g IV | ---- | 30 |
| 30 g I + 500 g IV | 32 | 70 |
| 30 g I | ---- | 3 |
| 250 g VI | ---- | 20 |
| 30 g I + 250 g VI | 22 | 90 |
| 30 g I | ---- | 3 |
| 30 g XI | ---- | 60 |
| 30 g I + 30 g XI | 61 | 95 |
| 30 g I | ---- | 3 |
| 250 g XVI | ---- | 30 |
| 30 g I + 250 g XVI | 32 | 95 |

Beispiel B2: Postemergenter Versuch:

Die Testpflanzensamen werden in Plastiktöpfe, die 0,5l sterilisierte Ackererde enthalten, im Gewächshaus angesät. Nach dem Auflaufen werden die Pflanzen im 2- bis 3-Blattstadium mit einer wäßrigen Dispersion der Wirkstoffkombination besprüht. Die Aufwandmenge an Wirksubstanz wird durch geeignete Verdünnung des Konzentrats eingestellt. Man versprüht jeweils 55 ml Dispersion pro $m^2$. Die Testpflanzen werden im Gewächshaus bei täglicher Bewässerung weiterkultiviert.

Nach 3 Wochen wird die Herbizidwirkung im Vergleich in einer unbehandelten Kontrollgruppe bewertet. Registriert wird die prozentuale Wachstumshemmung im Vergleich zur unbehandelten Kontrolle. Als Maßstab gilt folgende lineare Skala:

100 % = Pflanzen abgestorben
50 % = mittlere Wirkung
0 % = wie unbehandelte Kontrolle

Die Vergleichsergebnisse sind zusammen mit den nach der Colby-Formel berechneten Erwartungswerten in den Tabellen 3 bis 5 eingetragen. Angegeben sind die Formelbezeichnungen der jeweils angewendeten Wirkstoffe und deren Aufwandmengen sowie die geprüften Unkrautpflanzen.

Tabelle 3: Synergistische Wirkung gegen Sorghum halepense im Nachauflauf:

| Wirksubstanzen und Aufwandmengen in g AS/ha | Erwartungswert (nach Colby) | gemessene Wachstumshemmung |
| --- | --- | --- |
| 4 g I | ---- | 30 |
| 2000 g III | ---- | 0 |
| 4 g I + 2000 g III | 30 | 90 |
| | | |
| 4 g I | ---- | 30 |
| 125 g XIII | ---- | 40 |
| 4 g I + 125 g XIII | 58 | 90 |

Tabelle 4: Synergistische Wirkung gegen Alopecurus myosuroides im Nachauflauf:

| Wirksubstanzen und Aufwandmengen in g AS/ha | Erwartungswert (nach Colby) | gemessene Wachstumshemmung |
| --- | --- | --- |
| 8 g I | ---- | 12 |
| 30 g IX | ---- | 30 |
| 8 g I + 30 g IX | 38 | 95 |
| | | |
| 8 g I | ---- | 12 |
| 1000 g XIV | ---- | 20 |
| 8 g I + 1000 g XIV | 30 | 60 |
| | | |
| 15 g I | ---- | 50 |
| 60 g XV | ---- | 30 |
| 15 g I + 60 g XV | 65 | 90 |

Tabelle 5: Synergistische Wirkung gegen Digitaria sanguinalis im Nachauflauf:

| Wirksubstanzen und Aufwandmengen in g AS/ha | Erwartungswert (nach Colby) | gemessene Wachstumshemmung |
|---|---|---|
| 8 g I | ---- | 43 |
| 1000 g V | ---- | 0 |
| 8 g I + 1000 g V | 43 | 90 |
| 8 g I | ---- | 43 |
| 2000 g VIII | ---- | 30 |
| 8 g I + 2000 g VIII | 60 | 100 |
| 8 g I | ---- | 43 |
| 60 g X | ---- | 70 |
| 8 g I + 60 g X | 83 | 98 |

**Patentansprüche**

1. Herbizides Mittel, enthaltend eine Verbindung der Formel I

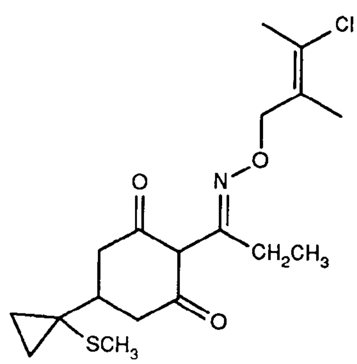

(I)

und eine synergistisch wirksame Menge entweder eines Wirkstoffs der Formel II

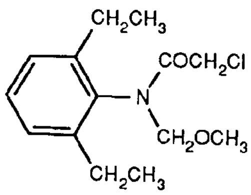

(II)

oder eines Wirkstoffs der Formel III

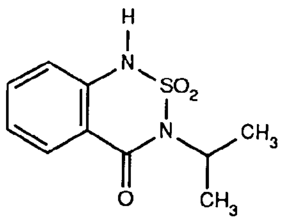

(III)

oder eines Wirkstoffs der Formel IV

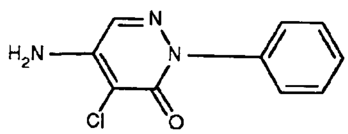

(IV)

oder eines Wirkstoffs der Formel V:

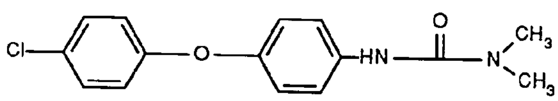

(V)

oder eines Wirkstoffs der Formel VI:

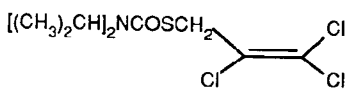

(VI)

oder eines Wirkstoffs der Formel VII:

$[CH_3(CH_2)_2]_2NCOSCH_2CH_3$ (VIII)

oder eines Wirkstoffs der Formel VIII:

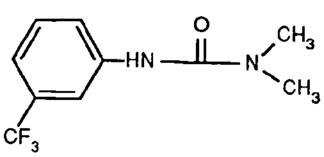

(VIII)

oder eines Wirkstoffs der Formel IX:

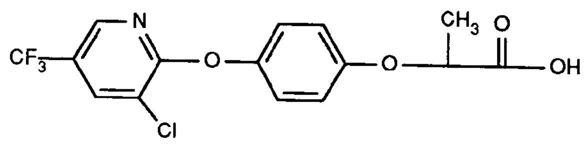

(IX)

oder eines Wirkstoffs der Formel X:

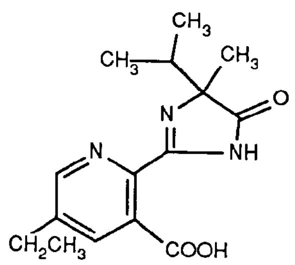

(X)

oder eines Wirkstoffs der Formel XI:

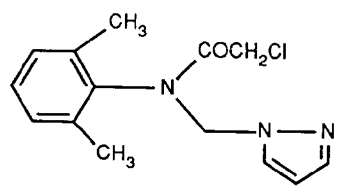

(XI)

oder eines Wirkstoffs der Formel XII:

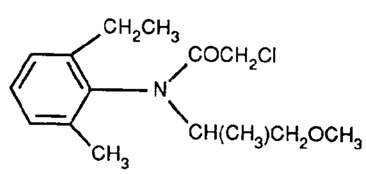

(XII)

oder eines Wirkstoffs der Formel XIII:

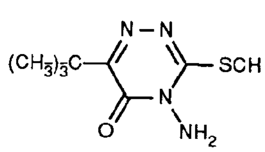

(XIII)

oder eines Wirkstoffs der Formel XIV:

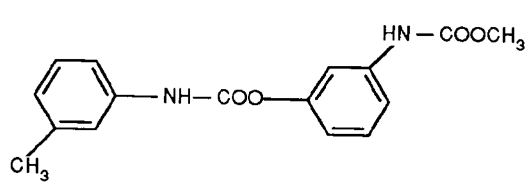

(XIV)

oder eines Wirkstoffs der Formel XV:

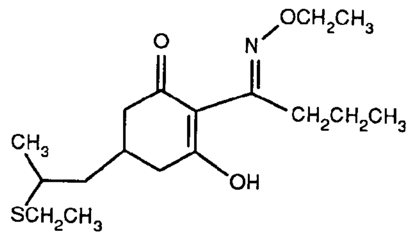

(XV)

oder eines Wirkstoffs der Formel XVI

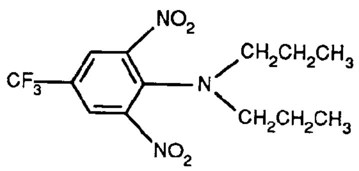

(XVI)

oder eines Wirkstoffs der Formel XVII

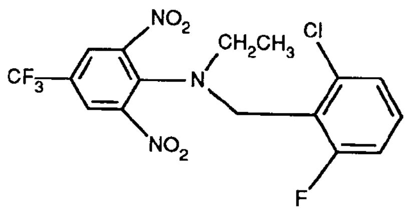

(XVII).

2. Herbizides Mittel gemäß Anspruch 1, enthaltend eine Verbindung der Formel I und eine synergistisch wirksame Menge entweder eines Wirkstoffs der Formeln III oder VI oder VIII oder XII oder XIII oder XIV.

3. Herbizides Mittel gemäß Anspruch 1, enthaltend eine Verbindung der Formel I und eine synergistisch wirksame Menge eines Wirkstoffs der Formel III.

4. Herbizides Mittel gemäß Anspruch 1, enthaltend eine Verbindung der Formel I und eine synergistisch wirksame Menge eines Wirkstoffs der Formel VI.

5. Herbizides Mittel gemäß Anspruch 1, enthaltend eine Verbindung der Formel I und eine synergistisch wirksame Menge eines Wirkstoffs der Formel VIII.

6. Herbizides Mittel gemäß Anspruch 1, enthaltend eine Verbindung der Formel I und eine synergistisch wirksame Menge eines Wirkstoffs der Formel XII.

7. Herbizides Mittel gemäß Anspruch 1, enthaltend eine Verbindung der Formel I und eine synergistisch wirksame Menge eines Wirkstoffs der Formel XIII.

8. Herbizides Mittel gemäß Anspruch 1, enthaltend eine Verbindung der Formel I und eine synergistisch wirksame Menge eines Wirkstoffs der Formel XIV.

9. Herbizides Mittel gemäß Anspruch 1, dadurch gekennzeichnet, daß in dem genannten Mittel die Komponente der Formel I gegenüber der Komponente der Formel II, III, IV, V, VI, VII, VIII, IX, X, XII, XIII, XIV, XV, XVI oder XVII in einem Gewichtsverhältnis von 1 : 1000 bis 1 : 1 vorhanden ist.

10. Verfahren zur Bekämpfung unerwünschten Pflanzenwuchses in Nutzpflanzenkulturen, dadurch gekennzeichnet, daß man eine herbizid wirksame Menge eines Mittels gemäß Anspruch 1 auf die Kulturpflanze oder deren Lebensraum einwirken läßt.

**11.** Verfahren gemäß Anspruch 10 zur Bekämpfung von Unkräutern in Kulturen von Soya, Zuckerrüben, Raps, Baumwolle und Gemüse.

**12.** Verfahren gemäß Anspruch 10 zur Bekämpfung von Unkräutern in Soya, Zuckerrüben, Raps und Baumwolle.

**13.** Verfahren gemäß Anspruch 10, dadurch gekennzeichnet, daß man die Nutzpflanzenkulturen mit dem genannten Mittel in Aufwandmengen behandelt, die 0,01 bis 2 kg Wirkstoffgesamtmenge pro Hektar entsprechen.